# EUROPÄISCHE PATENTSCHRIFT

(11) **EP 2 842 400 B1**
(45) Veröffentlichungstag und Bekanntmachung des Hinweises auf die Patenterteilung: **27.11.2019**
(21) Anmeldenummer: 13734950.2
(22) Anmeldetag: 26.04.2013
(51) Int. Cl.: H05B 37/02, H02J 13/00

(54) **SCHNITTSTELLE MIT SENDE- UND EMPFANGSZWEIG**
INTERFACE HAVING TRANSMITTER AND RECEIVER BRANCH
INTERFACE COMPORTANT UNE BRANCHE D'ÉMISSION ET UNE BRANCHE DE RÉCEPTION

(30) Priorität: 26.04.2012 DE 102012206906; 26.04.2012 AT 18212 U
(43) Veröffentlichungstag der Anmeldung: 04.03.2015
(73) Patentinhaber: Tridonic GmbH & Co. KG, 6851 Dornbirn (AT)
(72) Erfinder: BÖCKLE, Reinhard, A-6841 Mäder (AT)
(74) Vertreter: Rupp, Christian
(86) Internationale Anmeldenummer: PCT/AT2013/000081
(87) Internationale Veröffentlichungsnummer: WO 2013/159133

(56) Entgegenhaltungen:
- EP-A1- 2 837 096
- WO-A1-2010/043263
- WO-A1-2013/153510
- CN-A- 101 365 275

## Beschreibung

Die vorliegende Erfindung betrifft eine Schnittstelle für eine bidirektionale Kommunikation mit einem elektronischen Betriebsgerät für mindestens ein Leuchtmittel und ein Vorschaltgerät mit einer solchen Schnittstelle.

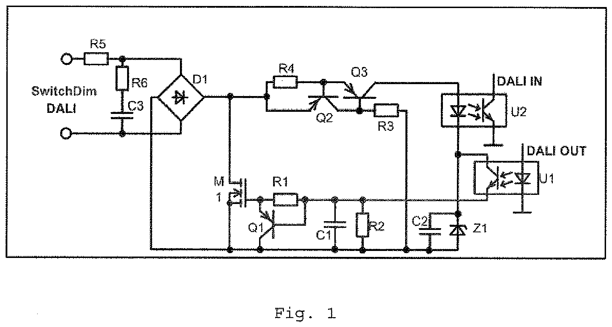

Aus der DE 10 2009 016 904 B4 ist eine Schnittstelle für DALI-Steuersignale bekannt, die einen Sende- und einen Empfangskanal aufweist, welche beide mit einer gemeinsamen Stromquelle betrieben werden können. Die Schaltung nach dem Stand der Technik ist in Fig. 1 gezeigt.

Auch aus CN101365275A ist eine Schnittestelle für DALI-Steuersignale bekannt.

Sowohl für den Empfang von DALI-Signalen als auch für das Senden von DALI-Signalen sind in der bekannten Schaltung entsprechende Optokoppler U2, U1 vorgesehen, die jeweils Teils eines Zweigs zum Senden bzw. Empfangen bilden. Beide Zweige werden von der gemeinsamen Stromquelle Q2, Q3, R3, R4 gespeist. Die Schaltung weist weiter einen Energiespeicher auf, der in Fig. 1 als Kondensator C2 dargestellt ist.

Die bekannte Schnittstelle ist für eine Kommunikation nach DALI-Standard entworfen, bei dem bei einem inaktiven Bus eine vorgegebene Gleichspannung auf den Leitungen anliegt. Diese vorgegebene Gleichspannung wird jeweils nur im Fall einer Signalübermittlung herabgesetzt, während die konstante Gleichspannung wiederum anliegt, wenn keine Signale übermittelt werden.

Durch die an dem Bus anliegende Gleichspannung wird nach dem Stand der Technik der Kondensator C2 geladen. Dies ist hier sinnvoll, da, wenn eine Signalübermittlung nach DALI-Standard stattfindet, eben die auf dem Bus anliegende Spannung auf (logisch) Null bzw. auf die Spannung abfällt, die für die Low-Level-Spannung definiert ist. Dies kann im Rückkanal (Sendezweig) der Schaltung unmittelbar erkannt werden.

"Rückkanal" bezieht sich auf den Kanal weg von der Schnittstelle, als den Kanal für den Sendebetrieb der Schnittstelle. Der "Sendezweig" ist entsprechend der zum Senden von Signalen verwendete Signalpfad der Schnittstelle.

Sollen jedoch statt DALI-Signalen Signale gemäss einem Protokoll von der Schnittstelle empfangen werden, bei denen im Ruhezustand des Bus die Spannung Null (oder sehr gering ist im Vergleich zum DALI-Standard) ist so stellt sich heraus, dass die bekannte Schnittstelle dafür nicht geeignet ist. Ein Beispiel für einen solchen Standard ist der sog. DSI-Standard.

Grund hierfür ist, dass, im Gegensatz zu dem DALI-Standard, nach DSI-Standard bei einem inaktiven Bus keine Spannung bzw. eine geringe Spannung anliegt (der "Low Level", also der niedrige Wert zur Übertragung eines ersten logischen Zustands, z.B. 0, ist auf < 6,5 Volt spezifiziert). Erst bei Übertragung eines DSI-Signals wird die Spannung auf dem Bus angehoben.

Trifft folglich ein DSI-Signal an dem Anschluss für das Betriebsgerät, also sekundärseitig, der bekannten Schnittstelle ein, so steigt die Spannung sprunghaft von dem Wert, für den ersten logischen Zustand, z.B. < 6,5 Volt, auf eine vorgegebene Gleichspannung an, z.B. 10 - 15 Volt (High-Level, also der Spannungswert, der als zweiter logischer Wert interpretiert wird, z.B. 1). Es ist nun notwendig, dass das eingehende Signal sofort erkannt wird, um eine zuverlässige Erkennung des DSI-Signals zu gewährleisten. Bei DSI erfolgt die Übertragung manchesterkodiert, d.h. ein Daten-Bit wird durch einen Wechsel vom Low-Level zum High-Level (logisch 0) bzw. einen Wechsel vom High-Level zum Low-Level (logisch 1) übertragen.

Der Kondensator C2 aus der bekannten Schaltung wirkt hierbei jedoch störend, da die abfallende Flanke (logisch 1) bzw. das erste Bit des DSI-Signals durch die bekannte Schnittstelle nicht zuverlässig erkannt werden kann.

Dies liegt daran, dass der Kondensator C2 nach Annehmen des High-Levels (für ca. 833 *µ*s), infolge der 2 mA Eingangsstromquelle teilgeladen ist. Bei einem Absinken der Busspannung auf unter 6,5 Volt wird der Kondensator C2 weiter geladen. Dies hat zur Folge, dass auch im Optokoppler U2 des Rückkanals (Empfangszweig) Strom fließt, und damit nicht sofort nach Unterschreiten von 6,5 Volt der erste logische Zustand (z.B. 1) am Optokoppler-Ausgang von Optokoppler U2 erkannt werden kann. Der Kondensator C2 ist nämlich selbst nach Unterschreitung des Low-Levels immer noch teilgeladen und überbrückt in nicht- oder teilgeladenem Zustand die Zenerdiode Z1, die den Stromfluss im Optokoppler U2 bei unterschreiten der Zenerspannung (Low Level) ansonsten sofort unterbricht.

Es ist daher Aufgabe der Erfindung, eine Schnittstelle bereit zu stellen, die es ermöglichen, das Prinzip des Energiespeichers auch für Protokolle zu verwenden, bei denen im Ruhezustand der Bus keine bzw. nur eine sehr geringe Spannung führt.

Die Erfindung löst dieses Problem durch das Bereitstellen einer Schnittstelle, wie sie mit Anspruch 1 beansprucht ist. Vorteilhafte Weiterbildungen der Erfindung sind Gegenstand der abhängigen Ansprüche.

In einem ersten Aspekt stellt die Erfindung eine digitale Schnittstelle für ein Betriebsgerät für ein Leuchtmittel bereit, wobei die Schnittstelle aufweist: einen Sende- und einen Empfangszweig, wobei der Empfangszweig eine Stromquelle aufweist, je einen Optokoppler im Sende- und Empfangszweig, wobei die Stromquelle die Primärseite des Optokopplers im Empfangszweig speist und einen über die Stromquelle geladenen Energiespeicher, der die Sekundärseite des Optokopplers im Sendezweig speist, dadurch gekennzeichnet, dass der Energiespeicher in einem Pfad geschaltet ist, der parallel zu einem Pfad liegt, der die Primärseite des Optokopplers des Empfangszweigs sowie ein nichtlineares Bauteil, vorzugsweise eine Zenerdiode aufweist. Das Signal am Empfangszweig ist ein Digital Serial Interface, DSI, -Signal.

Die Ladung des Energiespeichers kann unabhängig ist von einem am Empfangszweig anliegenden Signal sein.

Sende- und Empfangszweig können jeweils galvanisch getrennt sein, vorzugsweise durch jeweils einen durch die Stromquelle gespeisten Optokoppler.

Die Stromquelle kann aus einem Widerstand und einem Feldeffekttransistor bestehen und einen Ladestrom für den Energiespeicher, vorzugsweise einen Kondensator, bereitstellen, der vorzugsweise durch die Stromquelle begrenzt ist, z.B. auf 100 *µ*A.

Ein Eingangsstrom kann am Empfangszweig z.B. 1,6 mA zischen dem Optokoppler und dem Energiespeicher aufgeteilt werden, z.B. 1 mA für den Optokoppler und 600 *µ*A zum Laden des Energiespeichers.

Die Ladung des Energiespeichers kann unabhängig sein von einer abfallenden und/oder ansteigenden Flanke des am Empfangszweig anliegenden Signals.

Der Energiespeicher kann bspw. eine Kapazität von 1 bis 25 *µ*F aufweisen.

Die Schnittstelle kann einen mit der potentialniedrigeren Seite des Energiespeichers verbunden Widerstand aufweisen, über den eine Steilheit einer abfallenden Flanke des am Empfangszweig anliegenden Signals in der Schnittstelle einstellbar sein.

Die Schnittstelle kann einen mit der potentialniedrigeren Seite des Energiespeichers verbunden Kondensator aufweisen, über den eine Steilheit einer ansteigenden Flanke des am Empfangszweig anliegenden Signals in der Schnittstelle einstellbar sein.

Die potentialhöheren Seiten des mit dem Energiespeicher verbunden Kondensators und des damit verbunden Widerstands können über einen weiteren Widerstand verbunden sein, und über den verbunden Kondensator und den weiteren Widerstand kann eine Steilheit einer ansteigenden Flanke des am Empfangszweig anliegenden Signals in der Schnittstelle einstellbar sein.

Der Energiespeicher kann so gewählt sein, dass die Monotonie einer abfallenden Flanke des am Empfangszweig anliegenden Signals in der Schnittstelle unabhängig von einem Einfluss einer parasitären Drain-Source-Kapazität des Feldeffekttransistors ist.

In einem weiteren Aspekt stellt die Erfindung ein Vorschaltgerät mit einer Schnittstelle bereit, wie sie vorgehend beschrieben wurde.

Wesentliche Aspekte der Erfindung werden nunmehr mit Blick auf die Zeichnungen beschrieben.

Dabei zeigen:
- Fig. 1: eine Schnittstelle nach dem Stand der Technik.
- Fig. 2: eine schematische Darstellung einer erfindungsgemäßen Schaltungsanordnung.
- Fig. 3: ein Simulationsergebnis für eine Signalübertragung mit der erfindungsgemäßen Schaltungsanordnung nach Fig. 2.
- Fig. 4: einen vergrößerten Ausschnitt des Simulationsergebnisses, das in Fig. 3 dargestellt ist.
- Fig. 5: einen vergrößerten Ausschnitt aus Fig. 4.
- Fig. 6: eine weitere schematische Darstellung einer erfindungsgemäßen Schaltungsanordnung.
- Fig. 7: ein Simulationsergebnis für die Schaltungsanordnung aus Fig. 6.
- Fig. 8: eine Ausschnittvergrößerung aus dem Simulationsergebnis aus Fig. 7.
- Fig. 9: eine Ausschnittvergrößerung aus Fig. 8.

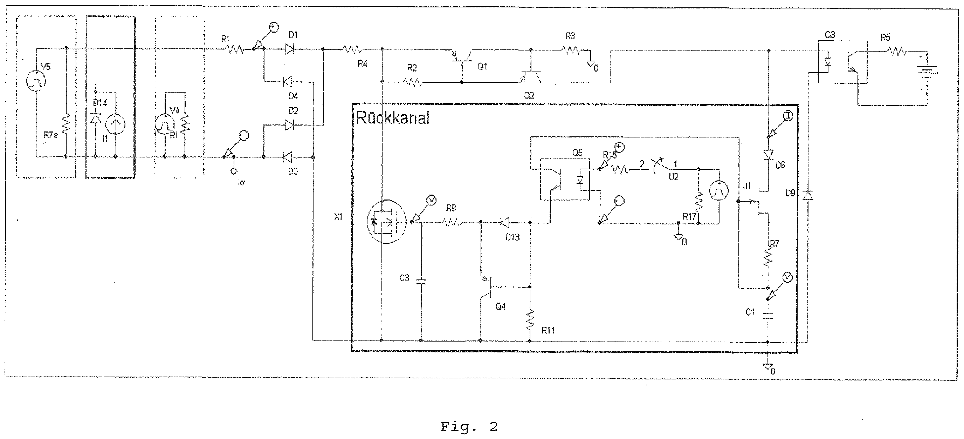

Fig. 2 zeigt eine Schaltungsanordnung nach der Erfindung. Hierin bilden insbesondere ein Feldeffekttransistor (FET, JFET) J1 und ein Widerstand R7 eine Stromquelle J1, R7, welche einen Ladestrom vorgegebener Höhe an einem Energiespeicher, der im Folgenden beispielhaft als Kondensator C1 bezeichnet ist, zur Verfügung stellt.

Dadurch wird einerseits sichergestellt, dass der Optokoppler Q5 letztlich von einem konstanten Strom (Eingangsstrom minus Ladestrom) durchflossen wird.

Andererseits wird die Wirkung eines nichtlinearen Bauteils, insbesondere einer Zenerdiode D9, nicht durch den Kondensator C1 überbrückt. Im Folgenden wird daher stellvertretend für das nichtlineare Bauteil der Begriff "Zenerdiode" verwendet. Vorzugsweise ist die Aufteilung des Stromes so gewählt, dass der Ladestromstrom für den Kondensator geringer ist als der Strom durch den Optokoppler, vorzugsweise in einem Bereich von 30% bis 70% des Optokoppler-Stroms.

Der Ladestrom für Kondensator C1 wird nun am Eingang des Optokopplers Q5 des Empfangszweigs abgegriffen (siehe Messpunkt I zwischen Diode D6 und Optokoppler Q5). Der Kondensator ist also Teil eines Pfads, der parallel zu einem Pfad geschaltet ist, der die Primärseite des Empfangs-Optokopplers aufweist.

Durch Einsatz der beschriebenen Stromquelle J1, R7 ist sichergestellt, dass eine abfallende Flanke eines DSI-Signals, also insbesondere das erste Bit des DSI-Befehls (Start-Bit, logisch 1, kodiert mit abfallender Flanke), schnell und zuverlässig erkannt wird. Dadurch, dass der Kondensator C1 nach Anliegen des High-Levels nicht erst entladen wird, ist direkt zu detektieren, wenn die Spannung auf den Low-Level abfällt. Dennoch kann auch in der erfindungsgemäßen Schaltung für den Rückkanal und Vorwärtskanal (Empfangs-/Sendezweig) eine gemeinsame Stromquelle genutzt werden.

Die erfindungsgemäße Schnittstelle ist neben der Verwendung für den Signalempfang nach DSI-Standard ebenfalls für den Signalempfang nach DALI-Standard einsetzbar. Wesentlich ist, dass die erfindungsgemäße Anordnung insbesondere das sehr schnelle Detektieren eintreffender Signale ermöglicht, auch wenn der Ruhezustand der Busspannung nahe 0 Volt oder 0 Volt ist.

Die erfindungsgemäße, in Fig. 2 gezeigte Schaltungsanordnung, ist so ausgestaltet, dass sie dem negativen Einfluss einer Stromquelle durch die Verwendung eines groß dimensionierten Kondensators (mit einer Kapazität von z.B. 1-6 *µ*F) entgegenwirkt, der von der Stromquelle mit dem FET J1 und dem Widerstand R7 auf ca. 5,5 Volt oder mehr geladen wird. Dabei ist lediglich ein parasitärer Einfluss der Drain-Source-Kapazität des FETs J1 vorhanden, die sich jedoch durch eine geeignete Dimensionierung der am Gate liegenden Kapazität verringern lässt.

Fig. 2 zeigt dabei in schematischer Darstellung die erfindungsgemäße Schnittstelle mit einem ersten primärseitigen Steueranschluss und einem zweiten primärseitigen Steueranschluss. Mit dem primärseitigen Steuereingang ist einerseits ein DALI-Steuergerät SDALI, andererseits ein Netztaster (nicht gezeigt) gekoppelt.

Vorliegend ist seriell zum ersten primärseitigen Steueranschluss ein Widerstand R1 angeordnet. Zwischen dem Widerstand R1 und dem zweiten primärseitigen Steueranschluss ist ein Gleichrichter gekoppelt, der vier Dioden D1 bis D4 umfasst.

Zwischen einen ersten und einen zweiten Gleichrichterausgangsanschluss ist ein Schalter X1 gekoppelt, insbesondere dessen Strecke Arbeitselektrode - Bezugselektrode. Mit dem Gleichrichterausgangsanschluss ist überdies eine Stromquelle gekoppelt, die zwei BipolarTransistoren Q1, Q2 sowie zwei ohmsche Widerstände R2, R3 umfasst. Mit dem Ausgang der Stromquelle ist ein erster Optokoppler Q3 gekoppelt, der in Serie zu einer Zenerdiode D9 gekoppelt ist. Parallel zu der Zenerdiode D9 ist eine Serienschaltung aus einer Diode D6, der Stromquelle J1, R7 bestehend aus FET J1 und Widerstand R7, und eine Kapazität C1 gekoppelt. Über die Stromquelle R7, J1 wird ein zweiter Optokoppler Q5 versorgt.

Der Optokoppler Q3 im Sendezweig kann über einen Ausgang der Schnittstelle mit einem ersten und einem zweiten Ausgangsanschluss Signale übergeben, während der zweite Optokoppler Q5 im Empfangszweig über einen Signaleingang mit einem ersten und einem zweiten Signalanschluss zum Empfangen von Signalen vorgesehen ist.

Der Ausgang des Optokopplers Q5 ist mit der Steuerelektrode des Schalters X1 verbunden, wobei auf dieser Strecke eine Diode D13 und ein Widerstand R9 in Serie geschaltet sind. Parallel zur Steuerelektrode des Schalters X1 ist eine Parallelschaltung eines Kondensators C3 und eines Widerstands R11 gekoppelt, die als Störfilter wirken. Zwischen dem Kondensator C3 und dem Widerstands R11 ist ein weiterer Bipolar-Transistor Q4 gekoppelt, dessen Basis mit der potentialhöheren Seite des Widerstands R11 gekoppelt ist.

Durch Verwendung der Stromquelle J1, R7 zum Laden des Kondensators C1 (dieser entspricht im Wesentlichen dem Kondensator C2 der bekannten Schaltung) ist dann die volle Funktionalität auch bei der Übertragung von Signalen nach dem DSI-Standard gegeben, da ein Laden des Kondensators C1 bei abfallender Flanke nicht mehr erfolgt, aber auch nach DALI-Standard. Der Kondensator C1 ist folglich immer geladen, wodurch eine Überbrückung der Zenerdiode D9 durch einen nicht- oder teilgeladenen Zustand bei abfallender Flanke entfällt.

Nach einem Einschalten der Netzspannung und damit einem Anliegen einer Gleichspannung auf einem vorbestimmten Level/Niveau nach DALI-Standard (DALI_{Ein}) wird der Kondensator C1 in rund 400 Millisekunden auf ca. 5,5 Volt oder mehr geladen, so dass sicher nach 600 Millisekunden (dies entspricht dem DALI-Standard) ab dem Einschaltzeitpunkt eine Antwort auf ein DALI-Signal gesendet werden kann.

Der Ladestrom wird dabei von der Stromquelle bestehend aus FET J1 und Widerstand R7 auf beispielsweise 100 *µ*A begrenzt. Dieser Wert kann jedoch abhängig von den verwendeten Komponenten auch höher oder niedriger sein.

Hierdurch wird der Optokoppler Q5 immer mit einem definierten Strom angesteuert, wobei der Strom durch FET J1 so gewählt ist, dass im Falle einer Übertragung eines DSI-Signals ein Einfluss auf die Bit-Zeit, d.h. die Zeit, in der ein Bit vom Sender zum Empfänger gesendet werden kann, klein ist.

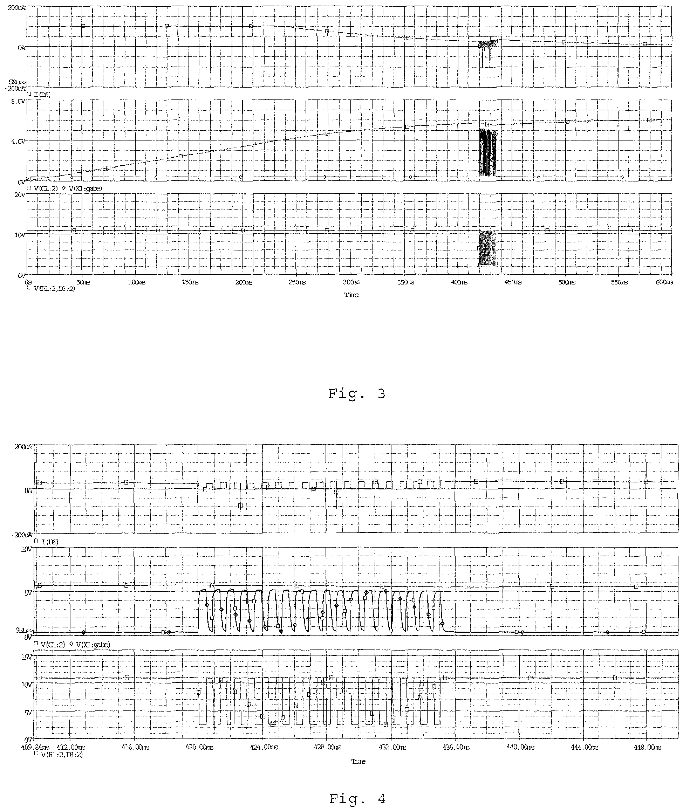

Der Einfluss auf die Bit-Zeit ist in Fig. 3 gezeigt und in dem dargestellten Simulationsergebnis nur bei 4 Mikrosekunden und einem Schwellwert von 2,3 Volt zu bemerken. Dies ist mit Bezug auf die Bit-Zeit des DSI-Standards mit 833 Mikrosekunden (*µ*s) vernachlässigbar. Daraus folgt, dass auch das erste Bit/die ersten Bits nach DSI-Standard immer korrekt empfangen wird/werden. Gezeigt ist in Fig. 3 oben ein Stromverlauf für den Strom an Diode D6 (Messpunkt I), der Ladestrom (ID6) von C1 wird auf 100uA begrenzt, in der Mitte Verläufe für die Spannungen am Kondensator C1 und am Gate des Schalters X1, Spannung an C1 erreicht nach 420ms mit rund 6V einen Wert um X1 genügend durchschalten zu können und nach 35ms (Dali) hat die Spannung an C1 wieder den Wert erreicht um neuerlich senden zu können, sowie unten der Spannungsverlauf an den Messpunkten + und - an Widerstand R1 und Diode D3, die Restspannung am Eingang ist <2,5 Volt bei 300mA Eingangsstrom. Der Bereich ist für die Zeit vom 0 bis 600 Millisekunden dargestellt.

Die in Fig. 4 vergrößerte Darstellung des Bereichs von 410 Millisekunden bis 450 Millisekunden aus Fig. 3 zeigt, dass z.B. ein FET X1 mit 5 Volt ausreichend angesteuert werden kann, da der in der Simulation verwendete FET bei einer Temperatur von 150°C und einer Gate-Spannung von größer - gleich 4,5 Volt bereits einen Widerstand R_{DS (on)} von kleiner 6 Ohm aufweist. Somit kann das niedrige Niveau ("Low-level") am Schnittstelleneingang auf unter 4 Volt gehalten werden (in der Simulation kleiner 2,5 Volt).

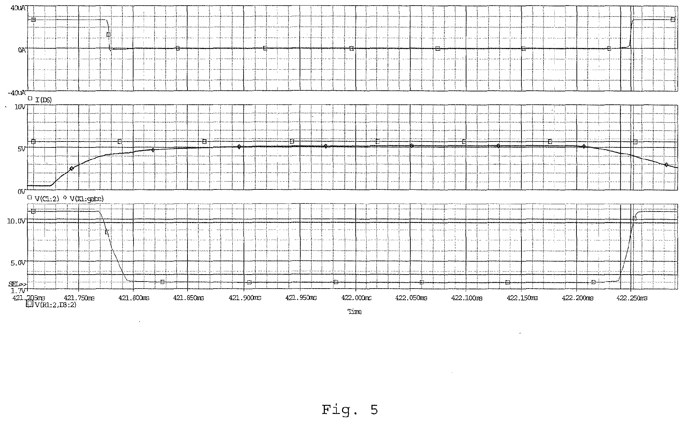

Fig. 5 zeigt eine Ausschnittvergrößerung aus Fig. 4. Hierzu sei angemerkt, dass die fallende Flanke des am Empfangszweig anliegenden Signals (unteres Simulationsfenster in Fig. 5) über die Dimensionierung der Kapazität C3 und des Widerstands R9 eingestellt werden kann und die fallende Flanke ist auf 14*µ*s (4,5V / 9,5V) eingestellt, während die steigende Flanke des am Empfangszweig anliegenden Signals über die Dimensionierung des Widerstands R11 eingestellt werden kann und die steigende Flanke ist auf 11*µ*s (4,5V / 9,5V) eingestellt. Die Einstellung der Flanken ist dabei weitgehend voneinander unabhängig.

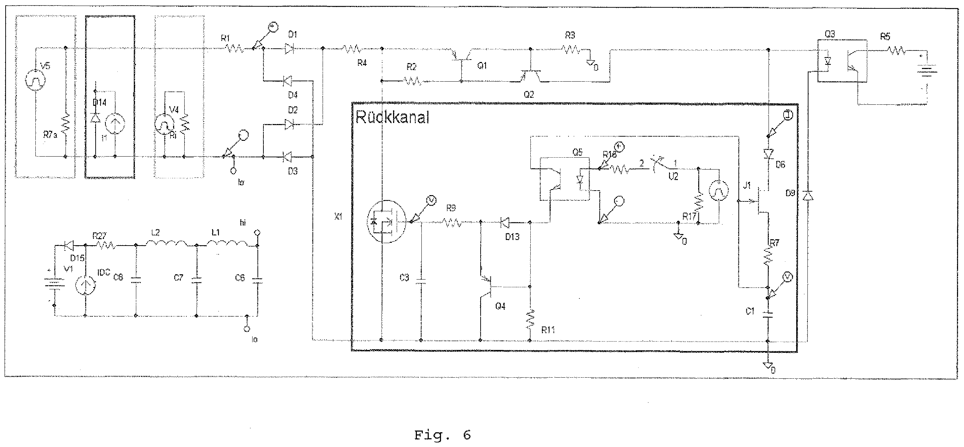

Die Figuren 6-9 zeigen ein Simulationsergebnis von erzeugten Flanken bei langen Busleitungen (etwa per Busleitungen mit einer Länge von etwa 300m), wobei die Schaltung in Fig. 6 größtenteils identisch ist zu der Schaltung aus Fig. 2. Dabei zeigt die Fig. 6 also wiederum eine schematische Darstellung einer erfindungsgemäßen Schaltung mit einer Ersatzschaltung für die Simulation der Leitungslänge.

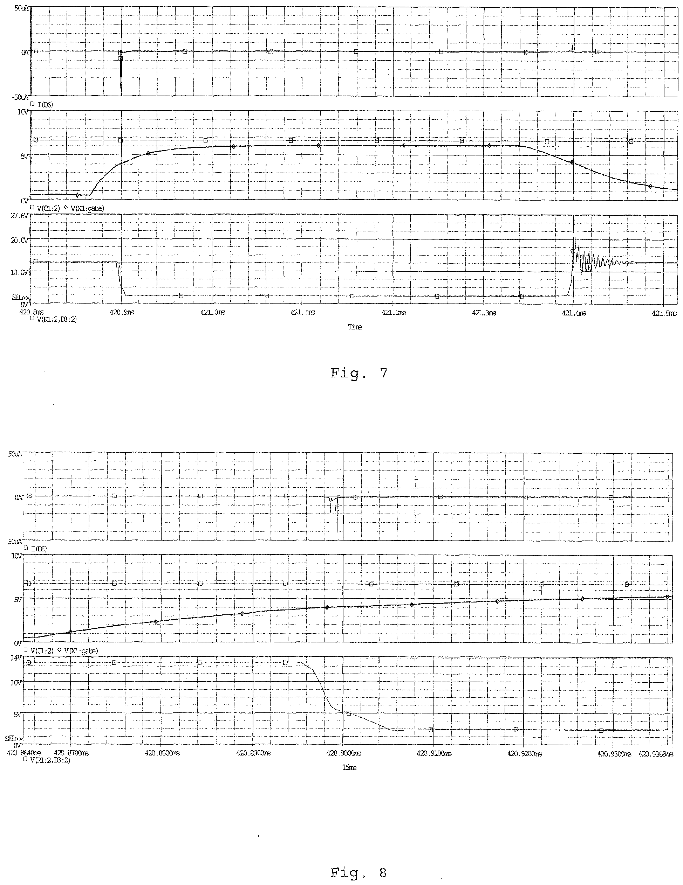

Fig. 7 zeigt ein Simulationsergebnis und die fallenden und steigenden Flanken von gesendeten DALI-Signalen. Gezeigt ist wiederum oben ein Stromverlauf für den Strom an Diode D6 (Messpunkt I), in der Mitte Verläufe für die Spannungen am Kondensator C1 und am Gate des Schalters X1 sowie unten der Spannungsverlauf an den Messpunkten + und - an Widerstand R1 und Diode D3.

Fig. 8 zeigt vergrößert die fallende Flanke. Es sei hierbei angemerkt, dass die Kapazität des Kondensators C3 so zu wählen ist, dass der Einfluss der parasitären Drain-Source-Kapazität von FET X1 so klein bleibt, dass eine Flanke monoton verläuft. Sie ist aber vorzugsweise so groß gewählt, dass die Festigkeit gegenüber eines Spannungsanstiegs (Surge) im gewünschten Ausmaß gegeben ist.Der Knick wird von der Drain Source Kapazität (parasitär) verursacht.

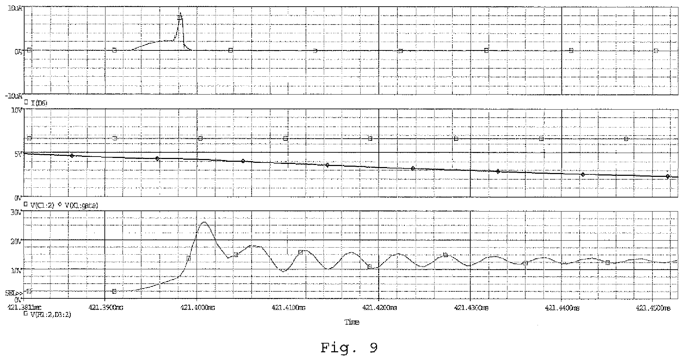

Fig. 9 zeigt nunmehr eine Vergrößerung des Simulationsbereiches aus Fig. 7 für eine steigende Flanke. Das in Fig. 9 gezeigte Ausschwingen wird lediglich durch die Leitung und die gewählte Leitungslänge von ca. 300m verursacht. Dem kann jedoch dadurch begegnet werden, dass die Steilheit der Flanken möglichst klein eingestellt wird, also die Flanke relativ flach verläuft.

Die gezeigten erfindungsgemäßen Schaltungen können wie folgt abgewandelt werden. Soll beispielsweise die Ansteuerspannung für den FET X1, also die Spannung an C1, erhöht werden, so kann ein Optokoppler Q3 mit einem Ansteuerstrom von ca. 1 Milliampere anstatt von z.B. 5 Milliampere (mA) verwendet werden. Dies kann z.B. ein Optokoppler vom Typ TLP621 oder TLP624 der Firma Toshiba sein.

Durch die Verringerung des Optokoppler-Stroms auf 1 Milliampere kann mehr Strom (z.B. 600 Mikroampere) zum Laden der Kapazität C1 zugelassen werden, wodurch die Spannung an C1 schneller ihren Sollwert erreicht und damit zum Zeitpunkt des Sendens nach 600 Millisekunden auch einen noch höheren Wert erreicht hat. Weiter können die Dioden D6 und D13 durch Schottky-Dioden ersetzt werden, wodurch die Steuerspannung am Gate des Schalters X1, wenn notwendig, um ca. 0,5 Volt angehoben werden kann. Dies ermöglicht dann eine Verwendung eines kleiner dimensionierten FETs X1.

## Patentansprüche

1. Digitale Schnittstelle für ein Betriebsgerät für ein Leuchtmittel, wobei die Schnittstelle aufweist:
- einen Sende- und einen Empfangszweig, wobei der Empfangszweig eine Stromquelle (Q1, Q2, R2, R3) aufweist,
- je einen Optokoppler (Q3, Q5) im Sende- und Empfangszweig, wobei die Stromquelle (Q1, Q2, R2, R3) die Primärseite des Optokopplers (Q3) im Empfangszweig speist und
- einen über die Stromquelle (Q1, Q2, R2, R3) geladenen Energiespeicher (C1), der die Sekundärseite des Optokopplers (Q5) im Sendezweig speist,
wobei der Energiespeicher (C1) in einem Pfad geschaltet ist, der parallel zu einem Pfad liegt, der die Primärseite des Optokopplers (Q3) des Empfangszweigs sowie ein nichtlineares Bauteil, vorzugsweise eine Zenerdiode (D9) aufweist,
**dadurch gekennzeichnet**
**dass** das Signal am Empfangszweig ein Digital Serial Interface, DSI, -Signal ist.

2. Schnittstelle nach Anspruch 1, wobei die Ladung des Energiespeichers (C1) unabhängig ist von einem am Empfangszweig anliegenden Signal.

3. Schnittstelle nach einem der vorgehenden Ansprüche, wobei Sende- und Empfangszweig jeweils galvanisch getrennt sind, vorzugsweise durch jeweils einen durch die Stromquelle (Q1, Q2, R2, R3) gespeisten Optokoppler (Q3, Q5).

4. Schnittstelle nach einem der vorgehenden Ansprüche, wobei ein Eingangsstrom am Empfangszweig derart aufgeteilt ist, dass der Ladestrom des Energiespeichers (C1) geringer ist als der Strom durch die Primärseite des Optokopplers (Q3) des Empfangszweigs und wird.

5. Schnittstelle nach einem der vorgehenden Ansprüche, wobei die Ladung des Energiespeichers (C1) unabhängig ist von einer abfallenden und/oder ansteigenden Flanke des am Empfangszweig anliegenden Signals.

6. Schnittstelle nach einem der vorgehenden Ansprüche, wobei der Energiespeicher (C1) eine Kapazität von 1 bis 25 µF aufweist.

7. Vorschaltgerät für Leuchtmittel, insbesondere Gasentladungslampe, LEDs oder OLEDs, mit einer Schnittstelle nach einem der vorgehenden Ansprüche.

8. Leuchte, aufweisend ein Leuchtmittel, insbesondere Gasentladungslampe, LEDs oder OLEDs, sowie ein Vorschaltgerät nach Anspruch 7.

9. Gebäudetechnik-Bussystem, aufweisend wenigstens einen Busteilnehmer mit einer Schnittstelle nach einem der Ansprüche 1 bis 6.

## Claims

1. A digital interface for an operating device for a lamp, wherein the interface has:
- a transmitter and a receiver branch, wherein the receiver branch has a current source (Q₁, Q₂, R₂, R₃),
- an optocoupler (Q₃, Q₅) in each of the transmitter and receiver branches, wherein the current source (Q₁, Q₂, R₂, R₃) feeds the primary side of the optocoupler (Q₃) in the receiver branch and
- an energy store (C₁) charged via the current source (Q₁, Q₂, R₂, R₃), which energy store feeds the secondary side of the optocoupler (Q₅) in the transmitter branch,
wherein the energy store (C₁) is connected in a path, that lies parallel to a path that has the primary side of the optocoupler (Q₃) of the receiver branch and a non-linear component, preferably a Zener diode (D₉),
**characterized in**
**that** the signal at the receiver branch is a Digital Serial Interface, DSI, signal.

2. The interface according to Claim 1, wherein the charging of the energy store (C₁) is independent of a signal present at the receiver branch.

3. The interface according to any one of the preceding claims, wherein the transmitter branch and the receiver branch are in each case galvanically separated, preferably by in each case an optocoupler (Q₃, Q₅) fed by the current source (Q₁, Q₂, R₂, R₃).

4. The interface according to any one of the preceding claims, wherein an input current at the receiver branch is divided in such a manner that the charging current of the energy store (C₁) is lower than the current through the primary side of the optocoupler (Q₃).

5. The interface according to any one of the preceding claims, wherein the charging of the energy store (C₁) is independent of a falling and/or rising edge of the signal present at the receiver branch.

6. The interface according to any one of the preceding claims, wherein the energy store (C₁) has a capacity of 1 to 25 µF.

7. The ballast for lamps, in particular, a gas discharge lamp, LEDs or OLEDs, with an interface according to any one of the preceding claims.

8. The luminaire, comprising a lamp, in particular, a gas discharge lamp, LEDs or OLEDs, and a ballast according to Claim 7.

9. The building technology bus system, comprising at least one bus subscriber with an interface according to any one of Claims 1 to 6.

## Revendications

1. Interface numérique pour un appareil de commande pour un moyen d'éclairage, l'interface comprenant :
- une branche d'émission et une branche de réception, la branche de réception comprenant une source de courant (Q1, Q2, R2, R3),
- un optocoupleur (Q3, Q5) dans chacune des branches d'émission et de réception, la source de courant (Q1, Q2, R2, R3) alimentant le côté primaire de l'optocoupleur (Q3) dans la branche de réception et
- un accumulateur d'énergie (C1) chargé par l'intermédiaire de la source de courant (Q1, Q2, R2, R3), qui alimente le côté secondaire de l'optocoupleur (Q5) dans la branche d'émission,
l'accumulateur d'énergie (C1) étant disposé dans un chemin qui est parallèle à un chemin qui comprend le côté primaire de l'optocoupleur (Q3) de la branche de réception ainsi qu'un composant non linéaire, de préférence une diode Zener (D9),
**caractérisée en ce que**
le signal au niveau de la branche de réception est un signal Digital Serial Interface DSI.

2. Interface selon la revendication 1, la charge de l'accumulateur d'énergie (C1) étant indépendante d'un signal appliqué à la branche de réception.

3. Interface selon l'une des revendications précédentes, les branches d'émission et de réception étant séparées galvaniquement, de préférence chacune par un optocoupleur (Q3, Q5) alimenté par la source de courant (Q1, Q2, R2, R3).

4. Interface selon l'une des revendications précédentes, un courant d'entrée étant réparti sur la branche de réception de façon à ce que le courant de charge de l'accumulateur d'énergie (C1) soit et devienne inférieur au courant à travers le côté primaire de l'optocoupleur (Q3) de la branche de réception.

5. Interface selon l'une des revendications précédentes, la charge de l'accumulateur d'énergie (C1) étant indépendante d'un flanc descendant et/ou ascendant du signal appliqué à la branche de réception.

6. Interface selon l'une des revendications précédentes, l'accumulateur d'énergie (C1) présentant une capacité de 1 à 25 µF.

7. Ballast pour moyen d'éclairage, plus particulièrement une lampe à décharge de gaz, des LED ou des OLED, avec une interface selon l'une des revendications précédentes.

8. Luminaire comprenant un moyen d'éclairage, plus particulièrement une lampe à décharge de gaz, des LED ou des OLED, ainsi qu'un ballast selon la revendication 7.

9. Système de bus de technique du bâtiment comprenant au moins un participant au bus avec une interface selon l'une des revendications 1 à 6.
